# EUROPÄISCHE PATENTANMELDUNG

(11) **EP 1 288 066 A1**
(43) Veröffentlichungstag der Anmeldung: **05.03.2003**
(21) Anmeldenummer: 02019645.7
(22) Anmeldetag: 03.09.2002
(51) Int. Cl.: B60P 1/64

(54) **Vorrichtung zum Ab-/Aufrollen und zum Kippen einer Ladeeinrichtung für ein Fahrzeug**

(30) Priorität: 04.09.2001 DE 20114629 U
(71) Anmelder: Logoplan Fahrzeugtechnik GmbH, 42115 Wuppertal (DE)
(72) Erfinder: Leschus, Bernd, Dipl.-Ing., 42115 Wuppertal (DE)
(74) Vertreter: Liesegang, Eva

(57) **Zusammenfassung**

Die Erfindung bezieht sich auf eine Vorrichtung zum Ab-/Aufrollen und zum Kippen einer Ladeeinrichtung für ein Fahrzeug mit einer Hakeneinrichtung und einem Schubbauteil, das an einem Fahrzeugschassis angeordnet ist und mit der Hakeneinrichtung in Verbindung steht, wobei die Hakeneinrichtung einen Hakenarm und einen an dem Fahrzeugschassis angeordneten Basisarm umfaßt, der mit dem Hakenarm verbunden ist, und wobei die Hakeneinrichtung zum Ab-/Aufrollen und zum Kippen der Ladeeinrichtung relativ zu dem Fahrzeugschassis mit Hilfe einer Längenveränderung des Schubbauteils verlagerbar ist. Der Hakenarm ist über einen Zwischenarm an dem Basisarm gekoppelt, so daß der Zwischenarm relativ zu dem Hakenarm und relativ zu dem Basisarm schwenkbar ist.

## Beschreibung

Die Erfindung liegt auf dem Gebiet von Ab-/Aufroll- und Kippsystemen für Kraftfahrzeuge.

Derartige Systeme werden benutzt, um eine Ladeeinrichtung von einem Kraftfahrzeug aboder aufzurollen. Bei der Ladeeinrichtung kann es sich beispielsweise um einen Container oder eine offene Ladefläche handeln, wie sie beispielsweise bei Kipperfahrzeugen vorgesehen ist. Insbesondere bei letztgenannten Fahrzeugen ist neben dem Ab- und Aufrollen der Ladeeinrichtung vorgesehen, daß die Ladeeinrichtung gekippt werden kann, um beispielsweise ein Schüttgut abzuladen.

Bei bekannten Systemen zum Ab-/Aufrollen und zum Kippen der Ladeeinrichtung ist eine Abroll-Kipp-Hakeneinrichtung mit einem winkelförmigen Hakenarm und einem Basisarm vorgesehen. An einem seiner Enden ist der Basisarm schwenkbar an einem Fahrzeugchassis des Fahrzeugs angeordnet, auf dem sich die Ladeeinrichtung befindet. Ein anderes Ende des Basisarms ist gelenkig mit dem Hakenarm verbunden. Der Hakenarm umfaßt einen unteren und einen oberen Schenkel, wobei der untere Schenkel mit Hilfe einer Gelenkverbindung an den Basisarm gekoppelt ist. Zum Ab-/Aufrollen der Ladeeinrichtung werden der Basisarm und der Hakenarm mit Hilfe eines Hydraulikzylinders relativ zum Fahrzeugchassis verlagert, vorzugsweise geschwenkt. Die Ladeeinrichtung hängt hierbei an einem von dem unteren Schenkel abgewandten Ende des oberen Schenkels. Die Verlagerung des Basisarms und des Hakenarms wird mit Hilfe einer Änderung der Längenausdehnung des Hydraulikzylinders erreicht. Der Hydraulikzylinder steht mit dem Fahrzeugchassis und dem unteren Schenkel des Hakenarms in Verbindung. Beim Ab-/Aufrollen der Ladeeinrichtung mit Hilfe der bekannten Abroll-Kipp-Hakeneinrichtung wird die Ladeeinrichtung in eine Schrägstellung gebracht, in welche ein Boden der Ladeneinrichtung in einem Winkel von etwa 45° zur Erdoberfläche angestellt ist. Dieses führt häufig dazu, daß das Material oder die Gegenstände, die sich auf der Ladeeinrichtung befinden, ins Rutschen geraten.

Aufgabe der vorliegenden Erfindung ist es, eine verbesserte Vorrichtung mit einer Hakeneinrichtung zu schaffen, bei der die Wahrscheinlichkeit für das Verrutschen des Ladeguts beim Ab-/Aufrollen der Ladeeinrichtung vermindert ist.

Diese Aufgabe wird erfindungsgemäß durch eine Vorrichtung zum Ab-/Aufrollen und zum Kippen einer Ladeeinrichtung gemäß Anspruch 1 gelöst.

Ein wesentlicher Vorteil, welcher mit der Erfindung gegenüber dem Stand der Technik erreicht ist, besteht darin, daß die Ladeeinrichtung mit Hilfe des Vorsehen des Zwischenarms beim Ab-/Aufrollen weniger schräg zur Standfläche des Fahrzeugs gestellt ist, so daß ein Verrutschen des Ladeguts auf der Ladeeinrichtung verhindert ist. Die schwenkbare Ankopplung des Zwischenarms an den Basisarm und den Hakenarm verbessert die mechanischen Eigenschaften beim Einstellen der Hakeneinrichtung während des Auf-/Abrollens der Ladeeinrichtung. Mit Hilfe der geschaffenen Vorrichtung ist es möglich, daß beim Ab-/Aufrollen der Ladeeinrichtung ein Ladewinkel zwischen der Ladeeinrichtung und der Standfläche des Fahrzeugs von etwa 32° oder kleiner eingehalten wird. Im Vergleich dazu beträgt der Ladewinkel bei bekannten Vorrichtungen zum Ab-/Aufrollen und zum Kippen einer Ladeeinrichtung wenigstens etwa 45°.

Eine zweckmäßige Weiterbildung der Erfindung sieht vor, daß der Basisarm und der Hakenarm in einer eingefahrenen Stellung zumindest teilweise unterhalb der Ladeeinrichtung angeordnet sind, wodurch eine kompakte Anordnung der Ladeeinrichtung und der Hakeneinrichtung auf dem Fahrzeug ermöglicht ist, was unter anderem auch den Luftwiderstand des Fahrzeugs beim Fahren möglichst gering hält.

Eine platzsparende Anordnung des Hakenarms zusammen mit der Ladeeinrichtung auf dem Fahrzeug ist bei einer bevorzugten Ausgestaltung der Erfindung dadurch erreicht, daß der Hakenarm einen unteren und einen oberen Schenkel aufweist, die winkelförmig miteinander verbunden sind. Hierdurch ist darüber hinaus eine weitere Verminderung des Ladewinkels beim Ab-/Aufrollen der Ladeeinrichtung ermöglicht.

Eine größere Flexibilität bezüglich der Stellungen, die die Hakeneinrichtung einnehmen kann, wird bei einer zweckmäßigen Fortbildung der Erfindung dadurch erreicht, daß der untere und der obere Schenkel des Hakenarms relativ zueinander schwenkbar sind.

Die Verschwenkbarkeit wird bei einer vorteilhaften Ausführungsform zweckmäßig mit Hilfe eines anderen Schubbauteils erreicht, daß an dem unteren Schenkel angeordnet ist und dessen Länge zum Ausführen einer Schwenkbewegung des unteren und des oberen Schenkels relativ zueinander verändert werden kann.

Eine Erweiterung der Anwendungsmöglichkeiten der Hakeneinrichtung kann bei einer bevorzugten Weiterbildung der Erfindung dadurch erreicht werden, daß der untere Schenkel mindestens zwei Abschnitte umfaßt, die relativ zueinander verlagerbar sind, um eine Längenausdehnung des unteren Schenkels zu verändern. Hierdurch kann der Hakenarm insbesondere in der eingefahrenen Stellung der Hakeneinrichtung dazu benutzt werden, möglichst nah an die Ladeeinrichtung bewegt zu werden.

Eine platzsparende Variante der relativen Verlagerbarkeit der mindestens zwei Abschnitte ist bei einer vorteilhaften Ausgestaltung der Erfindung dadurch erreicht, daß die mindestens zwei Abschnitte zueinander verschiebbar sind.

Eine vorteilhafte Möglichkeit zur Ausführung der Verschiebbarkeit der mindestens zwei Abschnitte ist bei einer bevorzugten Ausgestaltung der Erfindung dadurch erreicht, daß einer der mindestens zwei Abschnitte in einem anderen der mindestens zwei Abschnitte verschiebbar gelagert ist. Hierdurch sind die mindestens zwei Abschnitte platzsparend ausbildbar.

Bei einer vorteilhaften Weiterbildung der Erfindung umfaßt die Vorrichtung eine Arretiereinrichtung zum Fixieren des Zwischenarms relativ zu dem Basisarm und eine weitere Arretiereinrichtung zum Fixieren des Zwischenarms relativ zu dem Hakenarm, wodurch die Kippfunktion gewährleistet ist.

Die Bewegungsmöglichkeiten der Hakeneinrichtung sind bei einer bevorzugten Fortbildung der Erfindung dadurch verbessert, daß an dem Zwischenarm ein weiteres Schubbauteil angeordnet ist, welches mit dem Hakenarm in Verbindung steht, so daß der Hakenarm mittels einer Längenänderung des weiteren Schubbauteils relativ zu dem Zwischenarm geschwenkt werden kann.

Die Erfindung wird im Folgenden anhand von Ausführungsbeispielen unter Bezugnahme auf eine Zeichnung näher erläutert. Hierbei zeigen:
- Figur 1: ein Fahrzeug mit einer aufgesetzten Ladeeinrichtung;
- Figur 2: das Fahrzeug nach Figur 1, wobei die Ladeeinrichtung in einer teilweise ab- bzw. aufgerollten Stellung dargestellt ist;
- Figur 3: das Fahrzeug nach Figur 1, wobei die Ladeeinrichtung beim Ab-/Aufladen mit Hilfe einer Stützeinrichtung im wesentlichen waagerecht gehalten wird;
- Figur 4: eine schematische Darstellung einer Hakeneinrichtung in einer Grundstellung;
- Figur 5: die Hakeneinrichtung nach Figur 4, wobei ein Hakenarm im Vergleich zur Darstellung in Figur 4 verlagert ist;
- Figur 6: die Hakeneinrichtung nach Figur 4, wobei ein Zwischenarm angewinkelt ist;
- Figur 7: die Hakeneinrichtung nach Figur 4, wobei ein Basisarm verlagert ist;
- Figur 8: eine schematische Darstellung der Hakeneinrichtung nach Figur 4 auf einem Fahrzeugchassis, wobei der Basisarm, der Zwischenarm und der Hakenarm relativ zueinander fixiert sind, so daß eine Kippfunktion ausgeführt werden kann; und
- Figur 9: eine vergrößerte Teildarstellung der Hakeneinrichtung mit einer Arretiereinrichtung nach Figur 4.

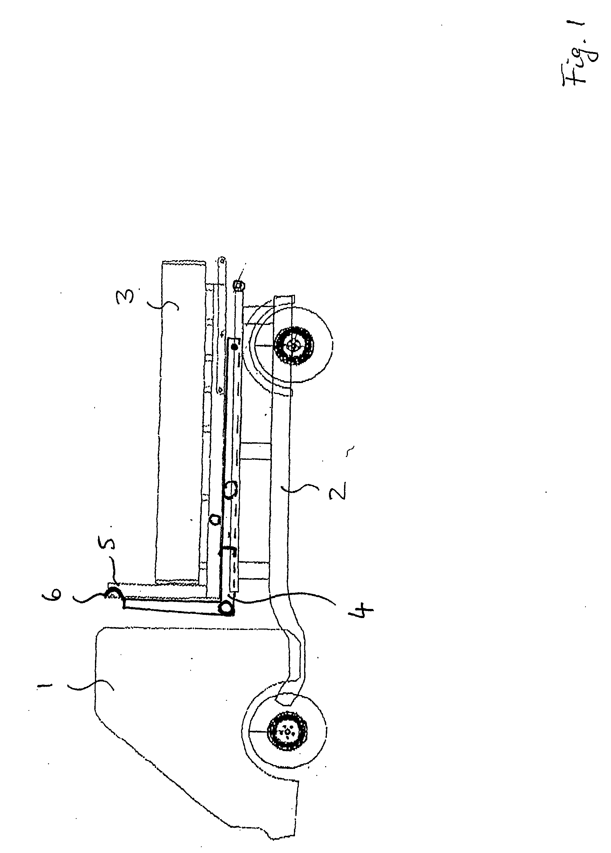

Figur 1 zeigt eine schematische Darstellung eines Kraftfahrzeugs 1 mit einem Fahrzeugchassis 2, auf dem eine Ladeeinrichtung 3 angeordnet ist. Eine Hakeneinrichtung 4 ist teilweise unterhalb der Ladeeinrichtung 3 angeordnet. Mit Hilfe der Hakeneinrichtung 4 kann die Ladeeinrichtung 3 auf- oder abgerollt sowie gekippt werden. Hierbei greift ein Haken 6 der Hakeneinrichtung 4 in einen Aufhänger 5 der Ladeeinrichtung 3, so daß die Ladeeinrichtung 3 an der Hakeneinrichtung 4 gehalten wird.

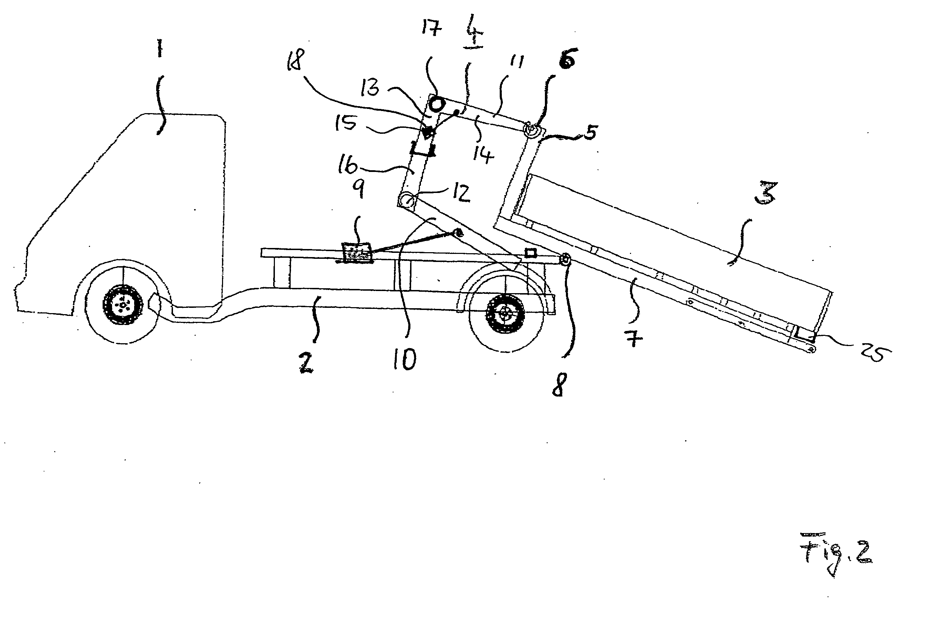

Figur 2 zeigt die Hakeneinrichtung 4 in einer teilweise ausgefahrenen Stellung zum Ab-/Aufrollen der Ladeeinrichtung 3. Beim Ab-/Aufrollen der Ladeeinrichtung 3 rollt ein Basisabschnitt 7 der Ladeeinrichtung 3 über eine Rolleinrichtung 8 an dem Fahrzeugchassis 2. Zum Ab-/Aufrollen der Ladeeinrichtung 3 wird die Hakeneinrichtung 4 mit Hilfe der Längenänderung eines Schubzylinders 9 verlagert. Der Schubzylinder 9 ist an dem Fahrzeugchassis 2 befestigt, steht mit einem Zwischenarm 10 der Hakeneinrichtung 4 in Verbindung und ist vorzugsweise als ein Hydraulikzylinder ausgebildet. Der Zwischenarm 10 ist mit einem Hakenarm 11 über eine gelenkige Verbindung 12 verbunden. Darüber hinaus steht der Zwischenarm 10 mit einem an den Fahrzeugchassis 2 angeordneten Basisarm in Verbindung, welcher zur Vereinfachung der Darstellung in den Figuren 1-3 nicht gezeigt ist. Der Hakenarm 11 weist einen unteren und einen oberen Schenkel 13, 14 auf. Der untere Schenkel 13 umfaßt zwei Abschnitte 15, 16, die relativ zueinander verlagerbar sind, so daß die Länge des unteren Schenkels 13 verändert werden kann. Die Verlagerbarkeit der zwei Abschnitte 15, 16 ist vorzugsweise dadurch erreicht, daß die zwei Abschnitte 15, 16 zueinander verschoben werden, was mit Hilfe einer hydraulischen Einrichtung (nicht dargestellt) ermöglicht wird, beispielsweise eine hydraulische Einrichtung, wie sie in Verbindung mit ausfahrbaren Elementen eines Kranarms zum Einsatz kommt. Hierbei können die zwei Abschnitte 15, 16 beispielsweise ineinander geschoben werden. Die Längenänderung des unteren Schenkels 13 wird insbesondere dazu genutzt, die Ladeeinrichtung 3 in der eingefahrenen Stellung der Hakeneinrichtung 4 (vgl. Figur 1) möglichst formschlüssig an der Hakeneinrichtung 4 anzuordnen, so daß eine optimierte Raumausnutzung an dem Fahrzeug 1 erreicht ist. Hierbei wird der obere Schenkel 14 mittels einer Verkürzung des unteren Schenkels 13 an die Ladeeinrichtung 3 heranbewegt.

Der untere und der obere Schenkel 13, 14 sind über eine Verbindung 17 aneinander gekuppelt. Die Verbindung 17 ermöglicht eine Verschwenkbarkeit des unteren und des oberen Schenkels zueinander. Zum Verschwenken wird eine Hydraulikzylinder 18 (vgl. Figur 2) genutzt. Die beiden Schenkel 13, 14 können in einer anderen, vereinfachten Ausführungsform auch starr miteinander verbunden sein, beispielsweise eine einteilige Ausbildung aufweisen.

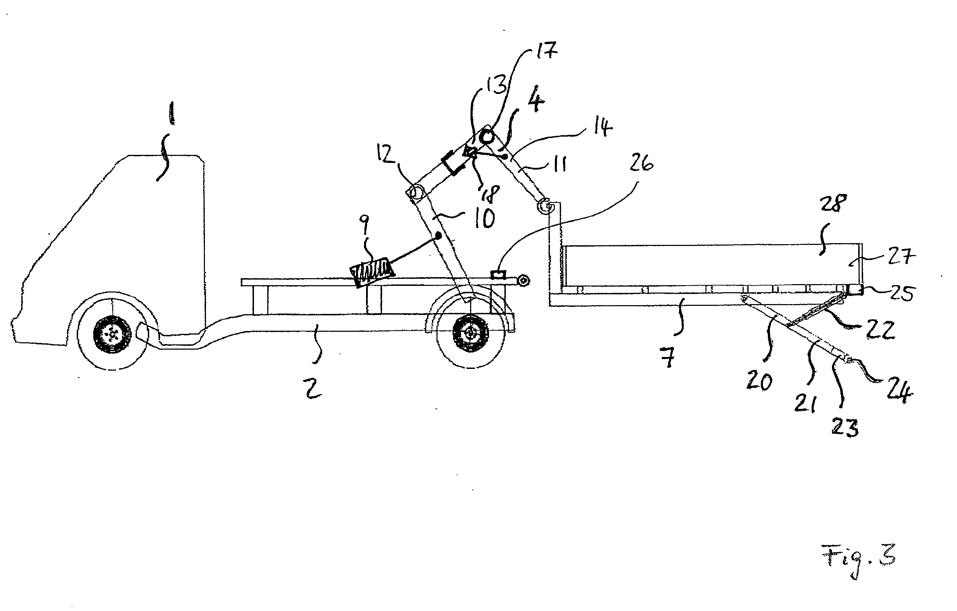

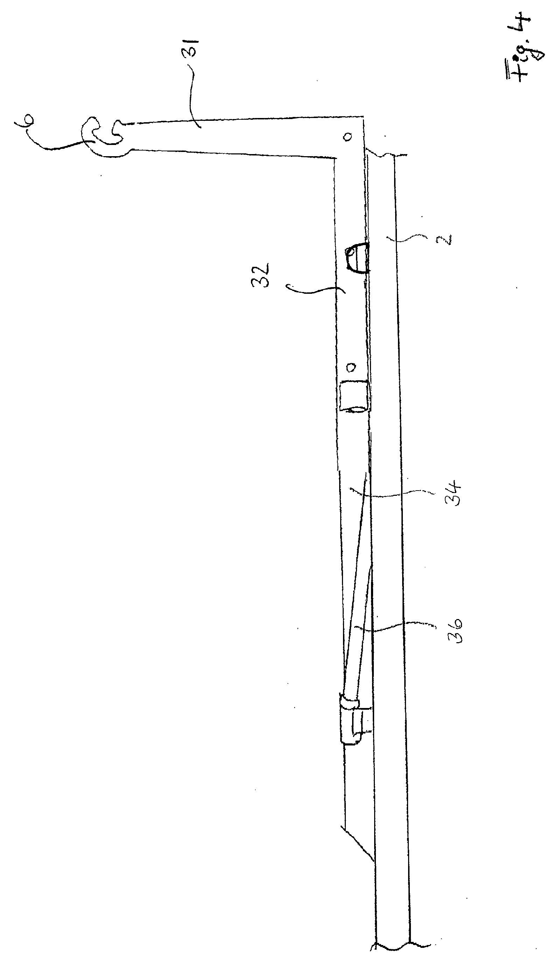

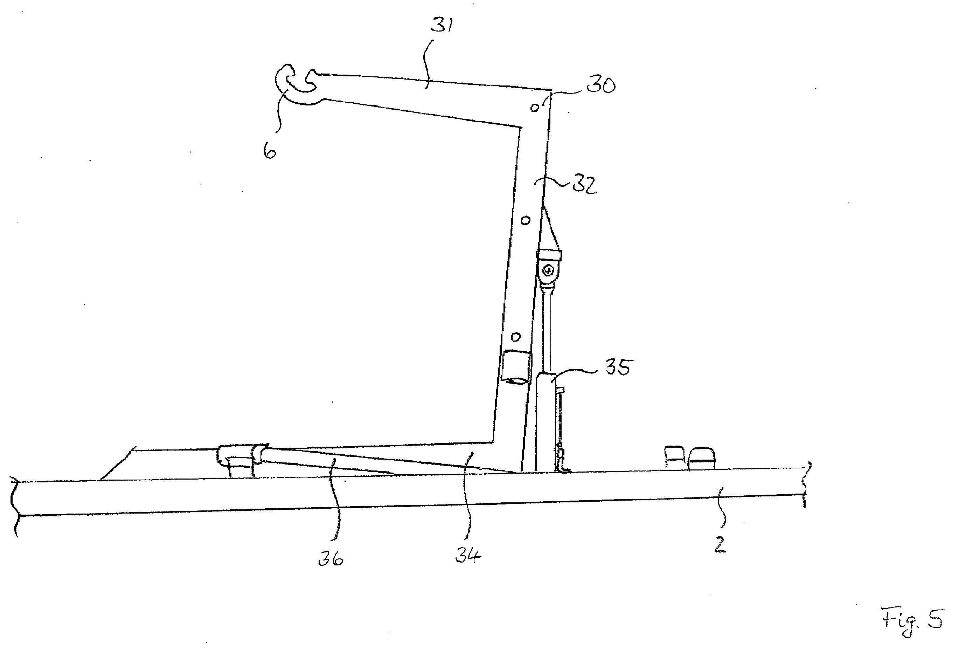

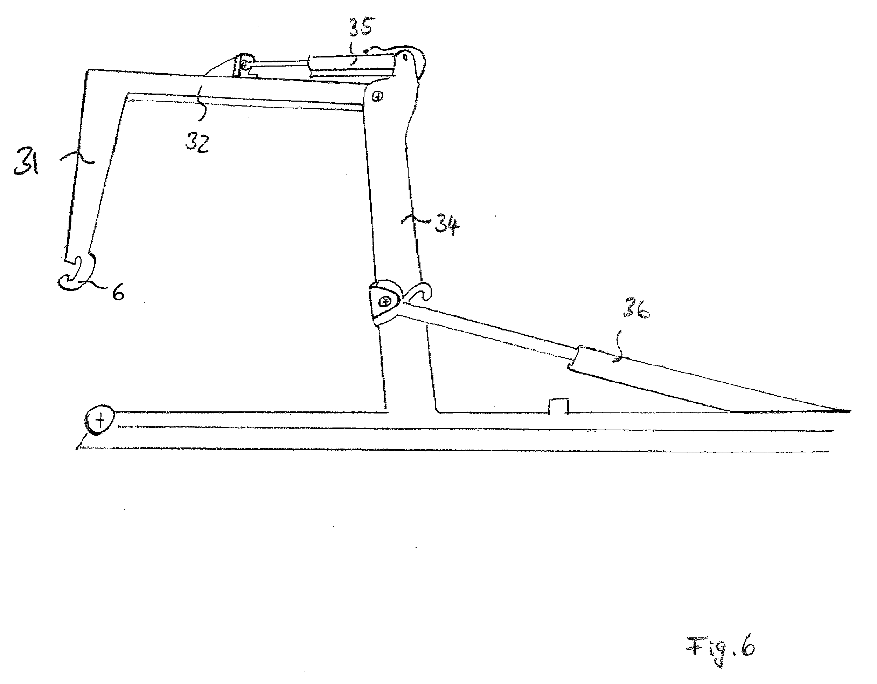

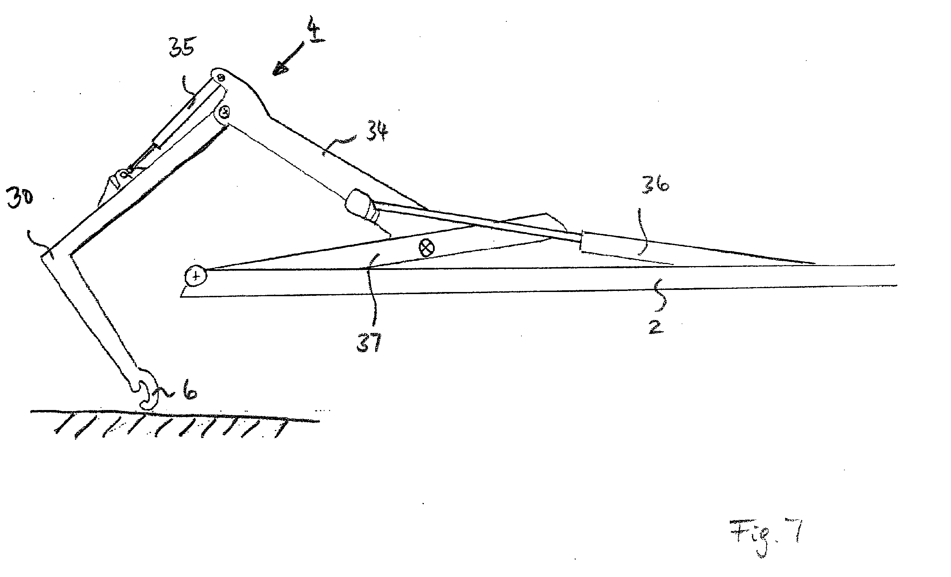

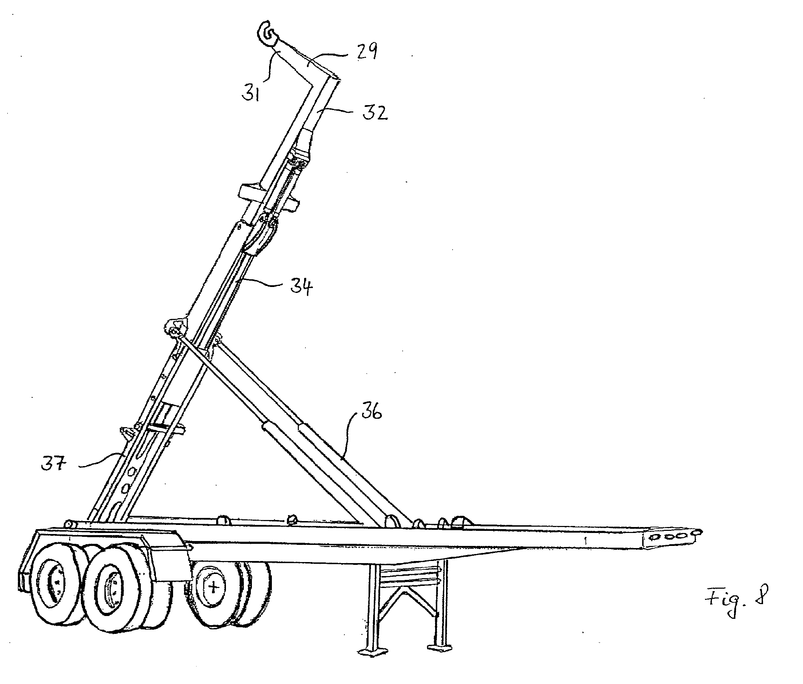

In Figur 3 ist eine andere Möglichkeit zum Ab-/Aufladen der Ladeeinrichtung 3 dargestellt. Die Ladeeinrichtung 3 weist eine Stützeinrichtung 20 auf. Ein Stützfuß 21 ist gelenkig an dem Basisabschnitt 7 der Ladeeinrichtung 3 befestigt. Der Stützfüß 21 wird mit Hilfe eines Schubzylinders 22, der vorzugsweise als ein Hydraulikzylinder ausgebildet ist, aus- bzw. eingefahren. An einem Ende 23 des Stützfußes ist eine Rolle 24 angeordnet, die sich beim Ab-/Aufladen der Ladeeinrichtung 3 auf der Standfläche des Fahrzeuges 1 bewegt.

Bei der Ladeeinrichtung 3 ist die höhenverstellbare Stützeinrichtung 20 zweckmäßig mit einem Neigungsschalter 25 verbunden, der vorzugsweise als ein opto-elektronischer Neigungsschalter ausgebildet ist. Auch andere Schalterelemente sind nutzbar, die die Neigung eines Gegenstands in geeigneter Weise mit Hilfe verarbeitbarer elektrischer Signale anzeigen. In Abhängigkeit von elektrischen Signale des Neigungsschalters 25, welcher den Neigungsgrad der Ladeeinrichtung 3 beim Auf-/Abrollen indiziert, erfolgt eine automatische Anpassung der höhenverstellbaren Stützeinrichtung 20, so daß die Ladefläche der Ladeeinrichtung 3 parallel zur Standfläche des Fahrzeugs 1 gehalten wird. Die Position des Neigungsschalters 25 an der Ladeeinrichtung 3 ist in Abhängigkeit der konstruktiven Merkmale in dem jeweiligen Anwendungsfall in geeigneter Weise auswählbar.

Mit Hilfe eines oder mehrerer Überfahrschalter 26 am Fahrzeugchassis 2 wird der Zeitpunkt erfaßt, zu dem sich die Ladeeinrichtung 3 beim Abrollen beginnt zu neigen. Die Überfahrschalter 26 werden von der Ladeeinrichtung 3 automatisch betätigt, wenn ein bestimmter Grad des Auf-/Abrollens der Ladeeinrichtung 3 erreicht ist. Mit Hilfe der von den Überfahrschaltern 26 erzeugten Signale wird das Ausfahren der höhenverstellbaren Stützeinrichtung 20 ausgelöst. Signale der Überfahrschalter 26 werden beim Aufrollen der Ladeeinrichtung 3 genutzt, um ein rechtzeitiges Einfahren der Stützeinrichtung 20 zu gewährleisten. Die Überfahrschalter 26 und der Neigungsschalter 25 stehen mit der Stützeinrichtung 20 in Verbindung. Dieses kann beispielsweise mit Hilfe einer geeigneten Steuereinrichtung (nicht dargestellt) erfolgen, die vorzugsweise im rückseitigen Bereich 27 der Ladeeinrichtung 3 in einem wetterfesten Stromkasten angeordnet ist.

Mit Hilfe der Stützeinrichtung 20 kann die Höhe eines hinteren Endabschnitts 28 der Ladeeinrichtung 3 über der Standfläche des Fahrzeugs 1 eingestellt werden. Auf diese Weise ist es möglich, die Ladeeinrichtung 3 während des Ab-/Aufladens mit Hilfe der Hakeneinrichtung 4 stets im wesentlichen parallel zur Standfläche zu halten. Hierdurch wird ein Verrutschen des Ladeguts auf der Ladeeinrichtung 3 im wesentlichen vollständig verhindert.

Die Nutzung der Stützeinrichtung 20, vorzugsweise in Verbindung mit dem Überfahrschalter 26 und dem Neigungsschalter 25, ist unabhängig von der Hakeneinrichtung 4 möglich und entfaltet seine vorteilhafte Wirkung, insbesondere hinsichtlich des Verhinderns des Verrutschens des Ladeguts, auch in diesem Fall. Es handelt sich dann um eine Ladeeinrichtung 3 für ein Fahrzeug mit einem Auf-/Abroll-Hakensystem, die dadurch gekennzeichnet ist, daß zum Einstellen eines Abstands zwischen einer Fahrzeugstandfläche und dem Basisabschnitt 7 in einem rückseitigen Bereich 27 eine höhenverstellbare Stützeinrichtung 20 vorgesehen ist.

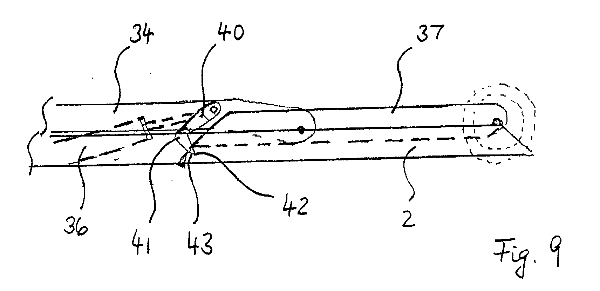

In den Figuren 4-6 ist eine zu der Hakeneinrichtung 4 im wesentlichen ähnliche Hakeneinrichtung 29 im Detail dargestellt. Figur 4 zeigt die Hakeneinrichtung 29 in einer eingefahrenen Stellung. In Figur 5 ist ein Hakenarm 30 relativ zu dem Fahrzeugchassis 2 nach oben abgewinkelt. Der Hakenarm 30 umfaßt einen oberen Schenkel 31 und einen unteren Schenkel 32, welcher zum Ausbilden einer Längenveränderbarkeit wiederum zwei Abschnitte aufweisen kann (vgl. Abschnitte 15, 16 in den Figuren 2 und 3). An einem Ende 33 des oberen Schenkels ist der Haken 6 (vgl. Figur 2) ausgebildet.

Gemäß Figur 6 ist bei der Hakeneinrichtung 29 der untere Schenkel 32 gelenkig mit einem Zwischenarm 34 verbunden, so daß der Hakenarm 30 relativ zu dem Zwischenarm 34 schwenkbar ist. Diese Schwenkbewegung wird mit Hilfe eines Hydraulikzylinders 35 ausgeführt. Zum Schwenken des Hakenarms relativ zu dem Zwischenarm 34 wird eine Längenausdehnung des Hydraulikzylinders 35 verändert. Der Hydraulikzylinder 35 ist zu diesem Zweck an dem unteren Schenkel 32 und an dem Zwischenarm 34 befestigt.

Der Zwischenarm 34 ist darüber hinaus mit einem weiteren Hydraulikzylinder 36 gelenkig verbunden. Mit Hilfe des weiteren Hydraulikzylinders 36 wird der Zwischenarm 34 verlagert.

Zum tatsächlichen Ablegen der Ladeeinrichtung 3 auf der Standfläche des Fahrzeugs 1 wird der Zwischenarm 34 mit Hilfe des weiteren Hydraulikzylinders 36 in eine ausgefahrene Stellung gebracht, was in Figur 7 gezeigt ist. Der Haken 6 befindet sich bei dieser Stellung der Hakeneinrichtung 4 nahezu auf der Standfläche des Fahrzeugs 1. Der Zwischenarm 34 ist mit einem Basisarm 37 so verbunden, daß der Zwischenarm 37 relativ zu dem Basisarm 37 schwenkbar ist. Der Basisarm 37 ist seinerseits gelenkig an dem Fahrzeugchassis 2 befestigt, so daß der Basisarm 37 mit Hilfe des weiteren Hydraulikzylinders 36, welcher an dem Zwischenarm 34 angreift, gemäß der Darstellung in Figur 7 ausgelenkt werden kann. In dieser ausgelenkten Stellung ist zwischen dem Fahrzeugchassis 2 und dem Basisarm 37 ein Winkel gebildet. Das Vorsehen des Zwischenarms 34 in der beschriebenen Weise ermöglicht es, daß zwischen der Standfläche des Fahrzeugs 1 und der Ladeeinrichtung 3 beim Ab-/Aufrollen der Ladeeinrichtung 3 ein möglichst kleiner Winkel gebildet ist, so daß die Wahrscheinlichkeit für das Rutschen des Ladeguts auf der Ladeeinrichtung 3 vermindert bzw. ein Rutschen im wesentlichen vollständig vermieden wird. Hierbei ist es besonders vorteilhaft, daß der Zwischenarm 34 mit dem Hakenarm 30 und dem Basisarm 37 gelenkig verbunden ist.

Sowohl im Zusammenhang mit der Hakeneinrichtung 4 als auch im Zusammenhang mit der Hakeneinrichtung 29 kann vorgesehen sein, daß der Schubzylinder 9 bzw. der Hydraulikzylinder 36 nicht mit dem Zwischenarm 10 bzw. 34 sondern mit dem jeweiligen Basisarm 37 (in Verbindung mit der Hakeneinrichtung nicht dargestellt) in Verbindung steht und mittels einer Kraftübertragung auf den Basisarm eine Verlagerung der jeweiligen Hakeneinrichtung 4 bzw. 29 erreicht wird. In diesem Fall ist für die gelenkige Verbindung zwischen dem Basisarm und dem Zwischenarm zweckmäßig ein weiterer Hydraulikzylinder vorzusehen, um eine Bewegbarkeit des Zwischenarms und des Basisarms jeweils zu gewährleisten.

In Figur 8 ist gezeigt, wie mit Hilfe der Hakeneinrichtung 29 eine Kippfunktion zum Kippen der Ladeeinrichtung 3 ausgeführt werden kann. Hierbei werden die gelenkigen Verbindungen zwischen dem unteren Schenkel 32 des Hakenarms 31 und dem Zwischenarm 34 sowie zwischen dem Zwischenarm 34 und dem Basisarm 37 arretiert, so daß der untere Schenkel 32 des Hakenarms 31, der Zwischenarm 34 und der Basisarm 37 entlang einer gemeinsamen Längsrichtung fixiert sind. Mit Hilfe des weiteren Hydraulikzylinders 36 erfolgt dann eine Schrägstellung dieser längsausgerichteten Bauteile zum Kippen der Ladeeinrichtung 3.

Die Arretierung des Zwischenarms 34 und des Basisarms 37 erfolgt hierbei mit Hilfe eines schwenkbaren Teils 40, das auch als Falle bezeichnet wird und dessen Wirkungsweise unter Bezugnahme auf Figur 9 erläutert wird. Das schwenkbare Teil 40 ist an dem Zwischenarm 34 angeordnet und weist einen Schwanenhals 41 auf. Durch das Eigengewicht fällt das schwenkbare Teil in eine Arretierstellung, die in Figur 8 gezeigt ist. In der Arretierstellung greift eine Spitze 42 des Schwanenhalses 41 teilweise in eine Kerbe 43 im Basisarm 37 ein.

Wenn der Zwischenarm 34 mittels des weiteren Hydraulikzylinders 36 zum Kippen geschwenkt wird, bleibt das schwenkbare Teil 40 in der in Figur 8 gezeigten Arretierstellung, so daß der Zwischenarm 34 und der Basisarm 37 gegen ein Verschwenken relativ zueinander gesperrt sind.

Beim Abrollen der Ladeeinrichtung 3 (vgl. Figur 2) wird der Zwischenarm 34 am Beginn der Bewegung der Hakeneinrichtung 4 um eine kurze Strecke relativ zu dem Basisarm 37 verschoben, so daß die Spitze 42 des Schwanenhalses 41 die Kerbe 43 verläßt, wodurch die für das Abrollen der Ladeeinrichtung 3 notwendige Verschwenkbarkeit des Basisarms 37 relativ zu dem Zwischenarm 34 ermöglicht ist.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Vorrichtung zum Ab-/Aufrollen und zum Kippen einer Ladeeinrichtung (3) für ein Fahrzeug mit einer Hakeneinrichtung (29) und einem Schubbauteil (36), das an einem Fahrzeugchassis (2) angeordnet ist und mit der Hakeneinrichtung (29) in Verbindung steht, wobei die Hakeneinrichtung (29) einen Hakenarm (30) und einen an dem Fahrzeugchassis (2) angeordneten Basisarm (37) umfaßt, der mit dem Hakenarm (30) verbunden ist, und wobei die Hakeneinrichtung (29) zum Ab-/Aufrollen und zum Kippen der Ladeeinrichtung (4) relativ zum Fahrzeugchassis (2) mit Hilfe einer Längenveränderung des Schubbauteils (36) verlagerbar ist, **dadurch gekennzeichnet, daß** der Hakenarm (31) über einen Zwischenarm (34) an den Basisarm (37) gekoppelt ist, so daß der Zwischenarm (34) relativ zu dem Hakenarm (31) und relativ zu dem Basisarm schwenkbar ist.

2. Vorrichtung nach Anspruch 1, **dadurch gekennzeichnet, daß** der Basisarm (37) und der Hakenarm (39) in einer eingefahrenen Stellung zumindest teilweise unterhalb der Ladeeinrichtung (3) angeordnet sind.

3. Vorrichtung nach Anspruch 1 oder 2, **dadurch gekennzeichnet, daß** der Hakenarm (11; 30) einen unteren und einen oberen Schenkel (13, 14; 31 32) aufweist, die winkelförmig miteinander verbunden sind.

4. Vorrichtung nach Anspruch 3, **dadurch gekennzeichnet, daß** der untere und der obere Schenkel (13, 14) des Hakenarms (11) relativ zueinander verschwenkbar sind.

5. Vorrichtung nach Anspruch 4, **gekennzeichnet durch** ein anderes Schubbauteil (18), das an dem unteren Schenkel (13) angeordnet ist und dessen Länge zum Ausführen einer Schwenkbewegung des unteren und des oberen Schenkels (13, 14) relativ zueinander verändert werden kann.

6. Vorrichtung nach einem der Ansprüche 3 bis 5, **dadurch gekennzeichnet, daß** der untere Schenkel (13) mindestens zwei Abschnitte (15, 16) umfaßt, die relativ zueinander verlagerbar sind, um eine Längenausdehnung des unteren Schenkels (13) zu verändern.

7. Vorrichtung nach Anspruch 6, **dadurch gekennzeichnet, daß** die mindestens zwei Abschnitte (15, 16) zueinander verschiebbar sind.

8. Vorrichtung nach Anspruch 7, **dadurch gekennzeichnet, daß** einer der mindestens zwei Abschnitte (15) in einem anderen der mindestens zwei Abschnitte (16) verschiebbar gelagert ist.

9. Vorrichtung nach einem der vorangehenden Ansprüche, **gekennzeichnet durch** eine Arretiereinrichtung zum Fixieren des Zwischenarms (34) relativ zu dem Basisarm (37) und eine weitere Arretiereinrichtung zum Fixieren des Zwischenarms (34) relativ zu dem Hakenarm (31) beim Kippen der Ladeeinrichtung (3).

10. Vorrichtung nach einem der vorangehenden Ansprüche, **dadurch gekennzeichnet, daß** an dem Zwischenarm (34) ein weiteres Schubbauteil (35) angeordnet ist, welches mit dem Hakenarm (31) in Verbindung steht, so daß der Hakenarm (31) mittels einer Längenänderung des weiteren Schubbauteils (35) relativ zu dem Zwischenarm (34) geschwenkt werden kann.
